# Europäisches Patentamt

## European Patent Office

## Office européen des brevets

(11) Veröffentlichungsnummer: **0 318 585**
**A1**

---

(12) ## EUROPÄISCHE PATENTANMELDUNG

veröffentlicht nach Art. 158 Abs. 3 EPÜ

(21) Anmeldenummer: **87908016.6**

(22) Anmeldetag: **30.10.87**

Daten der zugrundeliegenden internationalen Anmeldung:

(86) Internationale Anmeldenummer:
**PCT/SU 87/00120**

(87) Internationale Veröffentlichungsnummer:
**WO 88/03751 (02.06.88 88/12)**

(51) Int. Cl.⁴: **A 01 G 1/00**

(30) Priorität: **20.11.86 SU 4166274**

(43) Veröffentlichungstag der Anmeldung: **07.06.89**
**Patentblatt 89/23**

(84) Benannte Vertragsstaaten: **AT DE FR GB IT SE**

(71) Anmelder: **NAUCHNO-ISSLEDOVATELSKY ZONALNY INSTITUT SADOVODSTVA NECHERNOZEMNOI POLOSY, pos. Zagorie, Moscow, 115598 (SU)**
Anmelder: **VSESOJUZNY SELSKOKHOZYAISTVENNY INSTITUT ZAOCHNOGOOBRAZOVANIA, Balashikha, Moskovskaya obl., 143900 (SU)**

(71) Anmelder: **MOSKOVSKAYA SELSKOKHOZYAISTVENNAYA AKADEMIA IMENI K.A.TIMIRYAZEVA, ul. Timiryazevskaya, 49, Moscow, 127550 (SU)**
Anmelder: **VSESOJUZNY NAUCHNO-ISSLEDOVATELSKY INSTITUT UDOBRENY I AGROPOCHVOVEDENIA IMENI D.N.PRYAMISHNIKOVA, ul.Pryanishnikova, 31, Moscow, 127550 (SU)**

(72) Erfinder: **MIRENKOV, Jury Markovich, pos. Izmailovo, 3-80 Leninsky raion, Moskovskaya obl., 142718 (SU)**
Erfinder: **KNIZHNIKOV Valentin Nikolaevich, Moskovisky bulvar, 1/13-57 Balashikha, Mokovskaya obl., 143900 (SU)**
Erfinder: **RODIONOVA, Ljudmila Pavlovna, pos. Izmailovo, 3-80 Leninsky raion, Moskovskaya obl., 142718 (SU)**
Erfinder: **TSIMBALIST, Nikolai Ivanovich, ul. Mikhalkovskaya, 6-7, Moscow, 125008 (SU)**

(74) Vertreter: **von Füner, Alexander, Dr. et al, Patentanwälte v. Füner, Ebbinghaus, Finck Mariahilfplatz 2 & 3, D-8000 München 90 (DE)**

---

(54) **VERFAHREN ZUM ZÜCHTEN VON PFLANZEN AUS STECKLINGEN.**

(57) Das Verfahren zur Züchtung von Pflanzen aus Steckholz besteht darin, dass man eine Vorbereitung des Bodens unter Erhaltung einer Ausgangsoberfläche des Bodens durchführt; man schafft eine Topographie des Bodens durch Bildung auf dessen Oberfläche ununterbrochener parallellaufender Furchenraine und dazwischenliegender Furchen; dann pflanzt man Steckholz auf beiden Seiten der Furche unterhalb der Ausgangsoberfläche des Bodens unter die Furchenraine, indem man das Steckholz parallel zur Ausgangsoberfläche des Bodens ordnet: vor oder nach dem Pflanzen von Steckholz werden auf den Boden vor dem Auflaufen von Unkräutern Herbizide aufgetragen: danach führt man eine Lockerung durch, wobei die erste Lockerung nur dann durchgeführt wird, wenn die aus dem genannten Steckholz zu züchtenden Pflanzen die Spitzenhöhe der Furchenraine erreicht haben, die Lockerung wird je nach dem Auflaufen von Unkräutern wiederholt und nach der Bildung einer ebenen Oberfläche des Bodens aufgehoben; nach der Beendigung der Lockerung werden auf den Boden vor dem Auflaufen von Unkräutern Herbizide aufgetragen.

EP 0 318 585 A1

ACTORUM AG

## VERFAHREN ZUR ZÜCHTUNG VON PFLANZEN AUS STECKHOLZ

### Technisches Gebiet

Die Erfindung bezieht sich auf das Gebiet Landwirtschaft, insbesondere auf Verfahren zur Züchtung von Pflanzen, beispielsweise von Weiden, Pappeln, Johannisbeeren, Sanddorn, Weinstöcken, Pfirsichbäumen, Teesträuchern, Rosen und Geißblattgewächsen aus Steckholz.

Mit diesen Verfahren wird es bezweckt, von Unkräutern freie Plantagen von Kulturen, die in der Periode der Bewurzelung von Steckholz und der Entwicklung von Jungpflanzen (Frucht-, Beeren-, Wald-, Dekorations- und Blumenpflanzen) aus Steckholz gezüchtet werden, herzustellen und die Leistung der Plantagen zu steigern.

Die Züchtung von Pflanzen aus Steckholz kann sowozl zur Erhaltung von Normalpflanzgut als auch zur Begründung industrieller Plantage für die Herstellung von Nahrungsprodukten verwirklicht werden.

### Zugrundeliegender Stand der Technik

Bekannt ist ein Verfahren zur Züchtung von Pflanzen aus Steckholz (bedingt "Verfahren A" genannt), das die Vorbereitung des Bodens (Bedüngen, Pflügen Hacken, Ebnen der Bodenoberfläche), Pflanzung des Steckholzes unter Neigung zur ebenen Oberfläche des Bodens und die Pflege des gepflanzten Steckholzes (Handausdünnen, Bodenlockerung in Standweiten, Begießung des Bodens durch Beregnung) vorsieht (T.I. Shevyakova und andere. "Tipovye tekhnologicheskie karty po vozdelyvaniju plodovykh i yagodnykh kultur v Nechernozemnoi polose RSFSR", 1975, "Moskovsky rabochy", Moskau, S. 106-108).

Ein Nachteil des bekannten Verfahrens besteht darin, daß nach dem Pflanzen von Steckholz 4-6maliges Handausdünnen, 4-6maliges Bodenlockern in Standweiten und 1-3maliges Begießen erforderlich sind. Die genannte Anzahl von Ausdünnungen ist dadurch bedingt, daß es unmöglich ist, hochwirksame Herbizide sowohl in der Zeit

00318585

der Vorbereitung des Bodens für die Pflanzung von Steckholz als auch während der Pflege der gepflanzten Stecklinge wegen der negativen Reaktion des Steckholzes auf diese Herbizide zu verwenden.

Ein anderer Nachteil dieses Verfahrens besteht darin, daß es die Erscheinung des Auffrierens von Steckholz bei Herbstbegründung von Plantagen nicht ausschließt, das 50 % des gepflanzten Steckholzes erreichen kann.

Darüber hinaus übersteigt der Akklimatisierungsgrad von Steckholz 60-70 % nicht, da dieses Verfahren optimale ökologische Bedingungen zur Züchtung von Kulturen aus Steckholz nicht gewährleistet (bei der Ausübung dieses Verfahrens wird ein negativer Einfluß von Temperaturschwankungen der Umgebung auf den Prozeß der Züchtung von Pflanzen nicht ausgeschlossen). Der Nutzungsgrad des Bodens ist nach dem bekannten Verfahren gleich höchstens 0,3, und die Ausbeute an Normalpflanzgut gleich höchstens 60 %. Um die Bodenaustrocknung zu verhindern, erfordert das bekannte Verfahren eine arbeitsaufwendige Operation zur Mulchierung des Bodens mit Torf.

Bekannt ist auch ein Verfahren zur Züchtung von Pflanzen aus Steckholz (bedingt "Verfahren B" genannt), das eine Vorbereitung des Bodens (Bedüngen, Pflügen, Hacken, Ebnen der Bodenoberfläche ), die Herstellung von Beeten, die mit Papier oder mit lichtdichtem Film mulchiert werden, eine Pflanzung von Steckholz, die geneigt zur Oberfläche des Beetes ausgeführt wird, und eine Pflege des gepflanzten Steckholzes (Lockern des Bodens in Standweiten und Begießen des Bodens durch Beregnung) vorsieht (V.O. Trushechkin und andere. "Rekomendatsii po proizvodstvu smorodiny v Moskovskoi oblasti", 1984, TsNIITEI, Moskau, S. 15-16).

Ein Nachteil dieses Verfahrens besteht darin, daß es das Auffrieren von Steckholz nicht ausschließt. Außerdem sind bei Verwirklichung dieses Verfahrens kostspielige lichtdichte polymere Materialien für die Mulchierung der Bodenoberfläche von Beeten erforderlich. Die Ver-

Wendung dieser Materialien führt zur Verunreinigung der Umgebung sowie erschwert die Durchführung der Arbeiten nach Bekämpfung von Landwirtschaftsschädlingen und krankheitserregender Organismen, die im Boden leben oder den Anfangszyklus der Entwicklung durchgehen.

Darüber hinaus ist ein Verfahren zur Züchtung von Pflanzen aus Steckholz (bedingt "Verfahren C" genannt), das darin besteht, daß man eine Vorbereitung des Bodens durchführt (Bedüngen, Pflügen, Hacken, Ebnen der Bodenoberfläche), das Furchenziehen, Pflanzen des Steckholzes in senkrechter Ebene auf den beiden Seiten der Furche unter die Bodenoberfläche und die Pflege des gepflanzten Steckholzes (Handausdünnen, Bodenlockern in den Standweiten und Begießen des Bodens über die Furchen) ("Landwirtschaft von Sibirien", Nr. 10, 1960, Omsk, K.Yarkova "Uskorennoe vyraschivanie chernoi smorodiny v Priirtyshie", S. 58-61).

Ein Nachteil des bekannten Verfahrens besteht darin, daß bei der Züchtung von Kulturen aus Steckholz 4-6 Lockerungen des Bodens in den Standweiten, 4-6 Handausdünnungen von Kulturen in den Drillreihen und 3-4 Begießungen erforderlich sind. Die genannte Anzahl Ausdünnungen ist durch die Unmöglichkeit verursacht, hochwirksame Herbizide sowohl in der Zeit der Vorbereitung des Bodens für die Pflanzung von Steckholz wie in der Zeit der Pflege des gepflanzten Steckholzes wegen der negativen Reakttion des Steckholzes auf Herbizide zu verwenden.

Offenbarung der Erfindung

Der Erfindung liegt die Aufgabe zugrunde, bei dem Verfahren zur Züchtung von Pflanzen aus Steckholz solch eine Topographie des Bodens zu entwickeln und derart die Bedingungen des Pflanzens von Steckholz und der Pflege derselben zu ändern, damit die Handausdünnung von Unkräutern und die Erscheinung des Auffrierens von Steckholz sowie die Verwendung kostspieliger luftdichter polymerer Materialien, und die Verwendung von Papier und Torf für die Mulchierung des Bodens auszuschließen, die Anzahl der Begießungen und Lockerungen zu vermindern, den Nutzungsfaktor des Bodens, die Eingewöhnheit von Steckholz und somit die Leistung von Plantagen zu vergrößern.

Diese Aufgabe wird dadurch gelöst, daß ein Verfahren zur Züchtung von Pflanzen aus Steckholz vorgeschlagen wird, das die Vorbereitung des Bodens unter Erhaltung des Ausgangsoberfläche des Bodens, die Schaffung der Topographie des Bodens, die Pflanzung von Steckholz und die Lockerung vorsieht, entwickelt wird, wobei erfindungsgemäß die Topographie des Bodens durch Bildung ununterbrochener parallellaufender Furchenraine und dazwischenliegender Furchen geschaffen wird, das Steckholz auf beiden Seiten der Furche unterhalb der Ausgangsoberfläche des Bodens unter die Furchenraine gepflanzt wird, wobei das Steckholz parallel zur Ausgangsoberfläche gelegt wird, vor und nach dem Pflanzen von Steckholz vor dem Auflaufen von Unkräutern auf den Boden Herbizide aufgetragen werden, die Furchenraine gelockert werden, und die erste Lockerung nur dann durchgeführt wird, wenn die aus Steckholz gezüchteten Pflanzen die Spitzenhöhe der Furchenraine erreicht haben, wonach das Lockern je nach Erscheinung der aufgelaufenen Unkräuter wiederholt und nach der Bildung ebener Bodenoberfläche aufgehoben wird, dann nach Beendigung der Lockerung vor dem Auflaufen von Unkräutern Herbizide aufgetragen werden.

Dank der Herstellung ununterbrochener parallellaufender Furchenraine und dazwischenliegender Furchen und der Pflanzung des Steckholzes auf beiden Seiten der Furche unterhalb der Ausgangsoberfläche des Bodens unter die Furchenraine unter Anordnung des Steckholzes parallel zur Ausgangsoberfläche des Bodens wird die Möglichkeit erreicht, hochwirksame Herbizide vor oder nach dem Pflanzen von Steckholz zu verwenden, was es

00318585

ermöglicht, die Handausdünnung von Unkräutern völlig auszuschließen. Dabei wird das Steckholz vor dem Herbizidenbefall durch die Furchenraine geschützt. Außerdem erfüllen Furchenraine die Rolle von mulchierendem Material, wobei die Verwendung kostspieliger polymerer Stoffe sowie von Papier und Torf für diesen Zweck und folglich die Verunreinigung der Umwelt mit diesen Materialien ausgeschlossen werden.

Das Vorliegen von Furchenrainen ermöglicht es, die Begießung in Rayonen der ausreichenden Durchfeuchtung auszuschließen. Nötigenfalls sieht aber das erfindungsgemäße Verfahren die Möglichkeit der Begießung vor. So wird es empfohlen, in der Periode von der Schaffung der Topographie des Bodens bis zur letzten Lockerung die Begießung über die Furchen durchzuführen.

Nach der Bildung einer ebenen Bodenoberfläche, d.h. nach der Beendigung der Lockerung ist die Begießung durch Beregnung zu verwirklichen.

Die Ausführung der Lockerung nach dem erfindungsgemäßen Verfahren ermöglicht eine Vergrößerung der Masse des Wurzelsystems des gepflanzten Steckholzes.

Das erfindungsgemäße Verfahren zur Züchtung von Pflanzen aus Steckholz ermöglicht es, die Einwöhnheit der gepflanzten Stecklinge auf 100 % zu vergrößern, und somit die Leistung von Plantagen zu steigern, das Auffrieren von Steckholz bei Herbstpflanzung völlig zu beseitigen, und somit das Zurechtmachen der Stecklinge auszuschließen, den Nutzungsgrad des Bodens von 0,3 auf 0,9 zu erhöhen, die Anzahl der Begießungen und Lockerungen nicht weniger als um 50 % zu vermindern alle Operationen zur Züchtung von Pflanzen aus Steckholz zu mechanisieren, die Selbstkosten des Pflanzgutes 2-4mal geringer zu machen.

Beste Ausführungsvariante der Erfindung

Das erfindungsgemäße Verfahren zur Züchtung von Pflanzen aus Steckholz wird wie folgt durchgeführt.

Zunächst wird die Vorbereitung des Bodens vorgenommen die ein Bedüngen, Pflügen, Hacken und Ebnen der Bodenobenoberfläche unter der Ernaltung der Ausgangsoberfläche des Bodens vorsieht.

Im Falle der Frühjahrspflanzung von Steckholz können die Operationen zur Vorbereitung des Bodens sowohl im Herbst wie auch im Frühling, je nach geographischer Lage der zu behandelnden Feldstücke, und im Falle der Herbstpflanzung nur im Herbst durchgeführt werden.

Dann wird die Topographie des Bodens durch Bildung auf seiner Ausgangsoberfläche ununterbrochener parallellaufender Furchenraine von 20-30 cm Höhe und dazwischenliegender Furchen von 18-20 cm Tiefe geschaffen. Danach führt man die Pflanzung von Steckholz unter die Furchenraine aus. Man pflanzt das Steckholz auf beiden Seiten der Furche in ihrem oberen Teil, doch unterhalb der Ausgangsoberfläche, indem man das Steckholz parallel zur Ausgangsoberfläche des Bodens legt. Die Pflanztiefe des Steckholzes unter die Furchenraine wird durch die Notwendigkeit der Vermeidung des Auspflügens des Steckholzes von Landwirtschaftsgeräten bei Lockerung verursacht. In der Regel wird Steckholz unter die Furchenraine um 2-3 cm niedriger als die Ausgangsoberfläche des Bodens gepflanzt. Dabei kann im Herbst wie im Frühling gepflanzt werden.

Die Pflanzung von Steckholz unter die Furchenraine bei paralleler Lage des Steckholzes in bezug auf die Ausgangsoberfläche des Bodens ermöglicht die Verwendung hocheffektiver Herbizide zur Bekämpfung von Unkräutern, wodurch die Handausdünnung der Unkräuter vermeiden wird. Die Herbizide werden vor oder nach dem Pflanzen von Steckholz vor dem Erscheinen aufgelaufener Unkräuter auf den Boden aufgetragen.

Unter hochwirksamen Herbiziden können beispielsweise diejenigen verwendet werden, in denen als Wirkstoff 2-Chlor-4,6-bis(änhylamino)-symm-triazin, N-3,4-Dichlor-phenyl-N',N'-dimethylharnstoff, 5-Chlor-

00318585

6-methyl-3-tert.butylurazil unter einer Verbrauchsnorm
für Herbizide von 2 bis 4 kg/ha, umgerechnet auf den
Wirkstoff dient.

Die Verwendung von Herbiziden unter diesen Bedingungen ermöglicht es, von den Unkräutern freie Plantagen für die Periode der Bewurzelung des Steckholzes und
des Wachstums von Jungpflanzen bis zur Spitzenhöhe der
Furchenraine herzustellen.

Wenn die gezüchteten Pflanzen das Niveau der Furchnerainenspitzen erreicht haben, wird die erste Lockerung
ausgeführt. Lockerungen werden je nach Auflaufen der
Unkräuter wiederholt. Man beendigt die Lockerungen, wenn
sich eine ebene Bodenoberfläche bildet. Es wird empfohlen, 2-3mal zu lockern.

Nach der Beendigung der Lockerung werden vor dem
Erscheinen auflaufender Unkräuter Herbizide wie oben
beschrieben aber mit geringerer Verbrauchsnorm, gleich
0,75-1,0 kg/ha, umgerechnet auf Wirkstoff, auf den
Boden aufgetragen.

Alles Obendargelegte ermöglicht es, Plantagen
der aus Steckholz gezüchteter Pflanzen zu erhalten,
die für die ganze Vegetationsperide von Unkrautern
frei sind.

Wie oben dargelegt ist, schließt das Vorliegen
von Furchenrainen eine Begießung in Rayonen der ausreichenden Durchfeuchtung aus. Aber im Falle, wenn es nötig
ist, sieht das vorgeschlagene Verfahren auch die Möglichkeit der Begießung vor. In der Zeitspanne von der
Schaffung der Topographie des Bodens bis zur letzten
Lockerung wird es über den Furchen begossen, wobei die
Begießung innerhalb dieser Periode zu jeder beliebigen
Zeit, wenn der betreffende Fall eintritt, durchgeführt
werden kann. Nach der Bildung einer ebenen Bodenoberfläche, d.h. nach der Beendigung der Lockerungen,
wird es durch Beregnung begossen , dabei wird die Begießung gegebenenfalls vor und/oder nach dem wiederholten Auftragen von Herbiziden auf den Boden durchgeführt.

00318585

Ferner wird nach üblichem Verfahren zur Züchtung von Pflanzen aus Steckholz lediglich die Behandlung der gezüchteten Pflanzen vorgenommen, die eine Bekämpfung von Landwirtschaftsschädlingen und Pflanzenkrankheiten bezweckt.

Zu einem besseren Verständnis der vorliegenden Erfindung werden folgende Beispiele deren konkreter Ausführung angeführt.

Beispiel 1

Im Herbst wurde eine Vorbereitung des Bodens vorgenommen, die das Eintragen von Düngern, Pflügen, Hacken und Ebnen der Bodenoberfläche unter Erhaltung einer Ausgangsoberfläche des Bodens vorsieht.

Im Frühling wurde eine Topographie des Bodens durch die Bildung auf seiner Ausgangsoberfläche ununterbrochener parallellaufender Furchenraine von 20-30 cm Höhe und dazwischenliegender Furchen von 18-20 cm Tiefe geschaffen. Dann führte man die Begießung mit einem normalen Wasserdurchsatz von 300 m$^3$/ha aus. Man pflanzte danach Steckholz von Johannisbeere, Sanddorn, Weide, Papel von 20-25 cm Länge und Weinstock von 20-35 cm Länge, auf beiden Seiten der Furche unterhalb der Ausgangsoberfläche des Bodens unter die Furchenraine, indem man das Steckholz parallel zur Ausgangsoberfläche des Bodens ordnete. Die Pflanzung des Steckholzes unter die Furchenraine wurde um 2-3 cm nidriger als die Ausgangsoberfläche des Bodens zustande gebracht.

Die Pflanzung von Steckholz jeder Pflanzenart wurde auf den eigenen einzelnen Abschnitt vorgenommen, der die erwähnte Topographie mit Furchenrainen von 20, 25 und 30 cm- Höhe hatte.

Nach dem Pflanzen von Steckholz wurden Herbizide vor dem Auflaufen von Unkräutern auf den Boden aufgetragen, die als Wirkstoff 2-Chlor-4,6-bis(äthylamino)-symm-triazin, oder N-3,4-Dichlor-phenyl-N',N'-dimethylharnstoff, oder 5-Chlor-6-methyl-3-tert.butylurazil enthielten, wobei die Verbrauchsnorm für Herbizide 2, 3 und 4 kg/ha, umgerechnet auf den Wirkstoff, betrug.

Die genannten Bodenabschnitte, die dieser oder jener Art der gezüchteten Pflanze entsprechen, wurden in neun Querstreifen geteilt, auf jede von denen eines der genannten Herbizide mit einer konkreten Verbrauchsnorm von 2, 3 und 4 kg/ha aufgetragen wurde.

Nach dem Erreichen der Höhe der Spitzen von Furchenrainen mit den gezüchteten Pflanzen wurde die erste Lockerung der Furchenraine auf eine Tiefe von 3-5 cm, die zweite auf eine Tiefe von 5-7 cm und die dritte auf eine Tiefe fon 7-12 cm durchgeführt. Die zweite und dritte Lookerungen wurden je nach dem Auflaufen von Unkräutern vorgenommen. Die allmähliche Lockerung von Furchenrainen ermöglicht es, das Aufwerfen des Bodens auf die schwach entwickelten Pflanzen aus Steckholz zu vermeiden und die Masse des Wurzelsystems der gezüchteten Pflanzen durch Bildung und Wachsen von Wurzeln auf dem Abschnitt von Steckholz, der der Furche zugewandt ist, zu vergrößern.

Nach der Bildung einer ebenen Bodenoberfläche (nach der dritten Lockerung) wurde vor dem Auflaufen von Unkräutern auf den Boden ein Herbizid aufgetragen, das als Wirkstoff 2-Chlor-4,6-bis(äthylamino)-symm-triazin hatte, wobei die Verbrauchsnorm 1,0 kg/ha, umgerechnet auf den Wirkstoff, betrug.

Weiterhin führte man eine Begießung durch Beregnung unter einer Verbrauchsnorm von 300 $m^3$/ha durch.

Im Ergebnis wurden Plantagen der aus Steckholz gezüchteten Pflanzen hergestellt, die von Unkräutern für die ganze Vegetationspreiode frei sind, wobei eine 100%ige Eingewöhnheit von Steckholz und die Ausbeute an Normalpflanzgut für Johannisbeere - 90 %, für Sanddorn - 90 %, für Weide - 100 %, für Pappel - 100 %, für Weinstock - 87 % erhalten wurde.

Beispiel 2

Man züchtete Johannisbeere, Sanddorn, Weide, Pappel, Weinstock aus Steckholz ähnlich wie in Beispiel 1.

Aber Herbizide wurden zum ersten Mal vor dem Pflanzen von Steckholz und vor dem Auflaufen von Unkräutern auf den Boden aufgetragen, und die Begießung über die Furchen wurde sofort nach dem Pflanzen unter einer Verbrauchsnorm von 300 kg/ha durchgeführt.

Im Ergebnis wurden Plantagen der gezüchteten Pflanzen hergestellt, die frei von Unkräutern für die ganze Vegetationsperiode waren, die Eingewöhnheit von Steckholz betrug 100 %, die Ausbeute an Normalpflanzgut für Johannisbeere - 93 %, für Sanddorn - 88 %, für Weide - 100 %, fur Pappel - 100 %, für Weinstock - 90 %.

Beispiel 3

Man züchtete Johannisbeere, Sanddorn, Weide, Pappel, Weinstock ähnlich wie in Beispiel 1. Aber das Steckholz wurde im Herbst gepflanzt und Herbizide wurden zum ersten Mal auch im Herbst nach dem Pflanzen von Steckholz vor dem Auflaufen von Unkräutern auf den Boden aufgetragen, und die Begießung wurde nur durch Beregnung vor dem wiederholten Auftragen eines Herbizides auf den Boden durchgeführt. Als letztes wurde ein Herbizid benutzt, in dem als Wirkstoff N-3,4-Dichlor-phenyl-N',N',-dimethylharnstoff unter einer Verbrauchsnorm von 0,85 kg/ha, umgerechnet auf den Wirkstoff, diente.

Im ergebnis wurden Plantagen der gezüchteten Pflanzen hergestellt, die für die ganze Vegetationsperiode von Unkräutern frei waren, die Eingewöhnung von Steckholz betrug 100 %, die Ausbeute an Normalpflanzgut von Johannisbeeren- 90 %, Sanddornen - 91 %, Weiden - 100 %, Pappeln - 100 %, Weinstöcken - 90 %.

Beispiel 4

Man züchtete Johannisbeere, Sanddorn, Weide, Pappel, Weinstock aus Steckholz ähnlich wie in Beispiel 1. Aber das Steckholz wurde im Herbst gepflanzt und Herbizide wurden zum ersten Mal vor dem Pflanzen des Steckholzes und vor dem Auflaufen von Unkräutern auf den Boden aufgetragen. Außerdem wurde nach beendeter Lockerung der Furchenraine und nach der Bildung ebener Bodenoberfläche ein Herbizid auf den Boden aufgetragen, in dem als Wirkstoff 5-Chlor-6-methyl-3-tert.butylurazil, unter einer Verbrauchsnorm an Herbizid von 0,75 kg/ha, umgerechnet auf den Wirkstoff, diente und die Begießung wurde nur über die Furchen nach der ersten Lockerung durchgeführt.

Im Ergebnis wurden Plantagen gezüchteter Pflanzen hergestellt, die von Unkräutern für die ganze Vegetationsperiode frei waren, die Akklimatisierung von Steckholz betrug 100 %, die Ausbeute an Normalpflanzgut für Johannisbeere betrug 92 %, für Sanddorn 89 %, für Weide 100 %, für Pappel 100 %, für Weinstock 90 %.

Beispiel 5

Man züchtete Johannisbeere, Sanddorn, Weide, Pappel, Weinstock aus Steckholz ähnlich wie in Beispiel 1. Aber das Steckholz wurde im Herbst gepflanzt und Herbizide wurden zum ersten Mal im Frühling vor dem Auflaufen von Unkräutern auf den Boden aufgetragen.

Im Ergebnis wurden Plantagen gezüchteter Pflanzen hergestellt, die von Unkräutern für die ganze Vegetationsperiode frei waren, die Akklimatisierung von Steckholz betrug 100 % und die Ausbeute an Normalpflanzgut betrug: für Johannisbeere 90 %, für Sanddorn 90 %, für Weide 100 %, für Pappel 100 %, für Weinstock 89 %.

Beispiel 6

Man züchtete Johannisbeere, Sanddorn, Weide, Pappel, Weinstock aus Steckholz ähnlich wie in Beispiel 1. Dabei wurde es nicht begossen.

Im Ergebnis wurden Plantagen gezüchteter Pflanzen hergestellt, die für die ganze Vegetationsperiode von Unkräutern frei waren, die Akklimatisierung von Steckholz betrug 100 % und die Ausbeute an Normalpflanzgut betrug: für Johannisbeere 90 %, für Sanddorn 90 %, für Weide 100 %, für Pappel 100 %, für Weinstock 87 %.

Beispiel 7 (Vergleichsbeispiel)

Unter den Verhältnissen des bekannten Verfahrens A züchtete man Johannisbeere, Sanddorn, Weide, Pappel, Weinstock aus Steckholz. Dazu wurde zunächst eine Vorbereitung des Bodens (Bedüngen, Pflügen, Hacken und Ebnen der Bodenoberfläche durchgeführt, dann wurde das Steckholz geneigt zur Oberfläche des Beetes gepflanzt und das gepflanzte Steckholz gepflegt Handausdünnung, Lockerung des Bodens in Standweiten und Begießung des Bodens durch Beregnung).

Da am Anfang der Vegetationsperiode Plantagen gezüchteter Pflanzen mit einem hohen Grad der Verunkrautung (416 Stück Unkräuter pro 1 m$^2$ Bodenoberfläche) erhalten wurden, so führte man die erste Handausdünnung und dann die Lockerung aus. Solche Operationen mußten während der Vegetationsperiode noch drei Mal wiederholt werden.

Im Ergebnis betrug die Akklimatisierung für Johannisbeere, Sanddorn, Weide, Pappel und Weinstock 80, 60, 88, 91 bzw. 67%, die Ausbeute an Normalpflanzgut gleich 43, 48, 77, 82 bzw. 39 %.

Beispiel 8 (Vergleichsbeispiel)

Unter den Verhältnissen des bekannten Verfahrens B züchtete man Johannisbeere, Sanddorn, Weide, Pappel, Weinstock aus Steckholz. Zu diesem Zweck führte man eine Vorbereitung des Bodens (Bedüngen, Pflügen, Hacken, Ebnen der Bodenoberfläche) durch, dann mulchierte man Beete mit Papier oder mit lichtdichtem polymerem Film, pflanzte man das Steckholz geneigt zur Oberfläche des Beetes und pflegte man das gepflanzte Steckholz (Lockerung des Bodens in Standweiten und Begießung des Bodens durch Beregnung).

Im Ergebnis wurden Plantagen gezüchteter Pflanzen hergestellt, die für die ganze Vegetationsperiode frei von Unkräutern waren. Darüber hinaus erhielt man die Akklimatisierung von Steckholz für Johannisbeere, Sanddorn, Weide, Pappel und Weinstock 89, 70, 98, 100 bzw. 67% und die Ausbeute an Normalpflanzgut gleich 80, 60, 79, 95 bzw. 45 %.

Beispiel 9 (Vergleichsbeispiel)

Unter den Verhältnissen des bekannten Verfahrens C züchtete man Johannisbeere, Weide, Pappel aus Steckholz. Für diesen Zweck führte man eine Vorbereitung des Bodens (Bedüngen, Pflügen, Hacken, Ebnen der Bodenoberfläche), Ziehen von Furchen, Pflanzen von Steckholz in der senkrechten Ebene auf beiden Seiten der Furche unterhalb der Bodenoberfläche und eine Pflege des gepflanzten Steckholzes (Handausdünnung, Bodenlockerung in Standweiten und Begießung des Bodens über die Furchen) durch.

Da am Anfang der Vegetationsperiode Plantagen gezüchteter Pflanzen mit einem hohen Grad der Verunkrautung (635 Stück Unkräuter pro 1 $m^2$ Bodenoberfläche) erhalten wurden, so führte man die erste Handausdünnung der gezüchteten Pflanzen und danach die Lockerung aus. Diese Operationen mußten innerhalb der Vegetationsperiode noch 3 Mal wiederholt werden.

Im Ergebnis betrug die Akklimatisierung für Johannisbeere, Weide und Pappel 80, 99 bzw. 100 % und die Ausbeute an Normalpflanzgut gleich 70, 83 bzw. 90 %.

Nachstehend werden in der Tabelle Ergebnisse angeführt, die nach der Verwirklichung des erfindungsgemäßen Verfahrens nach Beispielen 1 bis 6 und bei Züchtung der Pflanzen aus Steckholz unter den Verhältnissen der bekannten Verfahren (Beispiele 7 bis 9) erhalten wurden.

Tabelle

Einwirkung der Verfahren zur Züchtung von Pflanzen aus Steckholz auf die Akklimatisierung von Steckholz, auf die Verunkrautung von Plantagen und auf die Ausbeute an Normalpflanzgut

| Verfahren zur Züchtung von Pflanzen | Art der gezüchteten Pflanzen | Unkräuter, Stücke/$m^2$ | Akklimatisierung v.Steckholz, % | Ausbeute an Normalpflanzgut % |
|---|---|---|---|---|
| 1 | 2 | 3 | 4 | 5 |
| Erfindungsgemäßes | Johannisbeere | 0 | 100 | 90-93 |
| | Sanddorn | 0 | 100 | 88-91 |

Fortsetzung der Tabelle

| 1 | 2 | 3 | 4 | 5 |
|---|---|---|---|---|
| Verfahren (Beispiele 1 bis 6 ) | Weide | 0 | 100 | 100 |
| | Pappel | 0 | 100 | 100 |
| | Weinstock | 0 | 100 | 87-90 |
| Bekanntes Verfahren A (Beispiel 7) | Johannisbeere | 416 | 80 | 43 |
| | Sanddorn | 416 | 60 | 48 |
| | Weide | 416 | 88 | 77 |
| | Pappel | 416 | 91 | 82 |
| | Weinstock | 416 | 67 | 39 |
| Bekanntes Verfahren B (Beispiel 8) | Johannisbeere | 0 | 89 | 80 |
| | Sanddorn | 0 | 70 | 60 |
| | Weide | 0 | 98 | 79 |
| | Pappel | 0 | 100 | 95 |
| | Weinstock | 0 | 67 | 45 |
| Bekanntes Verfahren C (Beispiel 9) | Johannisbeere | 635 | 80 | 70 |
| | Weide | 635 | 99 | 83 |
| | Pappel | 635 | 100 | 90 |

Wie es aus der Tabelle ersichtlich ist, ermögoicht es das erfindungsgemäße Verfahren, die Handausdünnung der genzüchteten Pflanzen zu 100 % auszuschließen, die Akklimatisierung von Steckholz auf 100 % zu vergrößern und die Ausbeute an Normalpflanzgut gleich 87 bis 100 %, je nach der Art der gezüchteten Pflanze zu erzielen.

Somit ermöglicht das erfindungsgemäße Verfahren, die Ausbeute an hochqualitativem Pflanzgut sowie die Leistung von Plantagen zu steigern.

Industrielle Anwendbarkeit

Die vorliegende Erfindung kann sowohl zur Erhaltung von Normalpflanzgut als auch zur Begründung industrieller Plantagen für die Herstellung von Nahrungsprodukten eingesetzt werden.

00318585

PATENTANSPRÜCHE

1. Verfahren zur Züchtung von Pflanzen aus Steckholz, das eine Vorbereitung des Bodens unter Erhaltung einer Ausgangsoberfläche des Bodens, die Schaffung einer Topographie des Bodens, die Pflanzung von Steckholz und die Lockerung vorsieht, dadurch gekennzeichnet , daß die Topographie des Bodens durch Bildung auf dessen Ausgangsoberfläche von ununterbrochenen, parallellaufenden Furchenrainen und dazwischenliegenden Furchen geschaffen wird, die Pflanzung von Steckholz auf beiden Seiten der Furche unterhalb der Ausgangsoberfläche des Bodens unter die Furchenraine verwirklicht wird, wobei das Steckholz parallel zur Ausgangsfläche des Bodens angeordnet wird, vor oder nach dem Pflanzen von Steckholz auf den Boden vor dem Auflaufen von Unkräutern Herbizide aufgetragen werden, die Furchenraine einer Lockerung unterworfen werden, wobei die erste Lockerung nur dann durchgeführt wird, wenn die aus dem genannten Steckholz zu Züchtenden Pflanzen die Spitzenhöhe der Furchenraine erreicht haben, wonach man die Lockerung je nach dem Auflaufen von Unkräutern wiederholt und mit dem Lockern aufhört, wenn eine ebene Oberfläche des Bodens gebildet wird, und nach Beendigung der Lockerung vor dem Auflaufen von Unkräutern Herbizide auf den Boden aufgetragen werden.

2. Verfahren nach Anspruch 1, dadurch gekennzeichnet , daß man in der Periode von der Schaffung der Topographie des Bodens bis zur letzten Lockerung eine Begießung über die Furchen durchführt.

3. Verfahren nach Anspruch 1, oder 2, dadurch gekennzeichnet , daß man nach der Beendigung der Lockerung eine Begießung durch Beregnung durchführt.

# 00318585

## INTERNATIONAL SEARCH REPORT

International Application No PCT/SU 87/00120

### I. CLASSIFICATION OF SUBJECT MATTER (if several classification symbols apply, indicate all)

According to International Patent Classification (IPC) or to both National Classification and IPC

$IPC^4$ – A 01 G 1/00

### II. FIELDS SEARCHED

| Minimum Documentation Searched | |
|---|---|
| Classification System | Classification Symbols |
| $IPC^4$ | A 01 G 1/00–1/06, 17/00 |

Documentation Searched other than Minimum Documentation
to the Extent that such Documents are Included in the Fields Searched

### III. DOCUMENTS CONSIDERED TO BE RELEVANT

| Category | Citation of Document, with indication, where appropriate, of the relevant passages | Relevant to Claim No. |
|---|---|---|
| A | Rekomendatsii po proizvodstvu smorodiny v Moskovskoi ablasti, 1984, TsNIIREI, Moscow, see page 15-16 | 1-3 |
| A | Selskoe Khozyaistvo Sibiri, No 10, 1960, (Organ Ministerstva selskogo Khozyaistva RSFSR, Omsk), K. Yarkova "Uskorennoe vyraschinavie chernoi smorodiny v Priirtyshii", see page 58-61 | 1-3 |
| A | SU, AI, (Vsesojuzny nauchno- issledovatelsky institut lesovodstva i melchanizatsii lasnogo khozyaistva) 30 November 1980 (30.11.80) | 1 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

### IV. CERTIFICATION

| Date of the Actual Completion of the International Search | Date of Mailing of this International Search Report |
|---|---|
| 28 December 1987 (28.12.87) | 20 January 1988 (20.01.88) |
| International Searching Authority ISA/SU | Signature of Authorized Officer |

Form PCT/ISA/210 (second sheet) (January 1985)